# NEUE EUROPÄISCHE PATENTSCHRIFT

(11) **EP 2 236 020 B2**
(45) Veröffentlichungstag und Bekanntmachung des Hinweises auf die Entscheidung über den Einspruch: **13.06.2018**
(45) Hinweis auf die Patenterteilung: 17.10.2012
(21) Anmeldenummer: 09015689.4
(22) Anmeldetag: 18.12.2009
(51) Int. Cl.: A01B 69/00, G05D 1/02

(54) **Routenplanungsverfahren und -system für landwirtschaftliche Maschine**
Navigation method and system for agricultural machine
Procédé et système de navigation pour machine agricole

(30) Priorität: 31.03.2009 DE 102009015112
(43) Veröffentlichungstag der Anmeldung: 06.10.2010
(73) Patentinhaber: CLAAS Selbstfahrende Erntemaschinen GmbH, 33428 Harsewinkel (DE)
(72) Erfinder: Meyer zu Helligen, Lars-Peter, 32139 Spenge (DE); Diekhans, Norbert, 33335 Gütersloh (DE); Nienaber, Gerd, 59302 Oelde (DE)

(56) Entgegenhaltungen:
- EP-A2- 0 821 296
- EP-A2- 1 840 690
- EP-A2- 1 847 897
- DE-A1-102004 027 242
- Bedienungsanleitung der Steuerung "AutoFarm GPS AutoSteer", copyright 2008
- Fotografie des AutoFarm Displays
- Rechnung des Unternehmens Compufarm and Firma M.P.J. Bus vom 18. Juli 2008
- sieben Videos in Ergänzung zur B3', darunter die Datei "Autofarm 3-1.wmv"

## Beschreibung

Die vorliegende Erfindung betrifft ein Verfahren und ein System zur Routenplanung von landwirtschaftlichen Maschinen, insbesondere zur Festlegung von Fahrspuren einer fahrbaren landwirtschaftlichen Maschine auf einem zu bearbeitenden Flächenstück.

Eine in idealer Weise, mit einem Höchstmaß an Effizienz bearbeitbare landwirtschaftliche Fläche ist eben, hat eine rechteckige Form und eine Breite, die exakt einem Vielfachen der Arbeitsbreite einer darauf eingesetzten landwirtschaftlichen Maschine entspricht, so dass die Maschine die Fläche bearbeiten kann, ohne dass ihr Bearbeitungswerkzeug Teile der Fläche zweimal überstreicht. In der Praxis sind diese Merkmale selten erfüllt; die Breite der Fläche ist kein ganzzahliges Vielfaches der Arbeitsbreite der darauf eingesetzten Maschine und/oder die Fläche ist von mehr oder weniger unregelmäßiger Form mit nicht parallelen Rändern und/oder sie enthält Hangstücks, in denen ein Arbeitswerkzeug, um dem Bodenprofil zu folgen, schräg gestellt werden muss, wodurch die effektive Arbeitsbreite der Maschine, gesehen in Projektion von oben, abnimmt.

Herkömmliche Routenplanungssysteme für landwirtschaftliche Maschinen sind nicht in der Lage, solche nicht idealen Verhältnisse zu berücksichtigen. Sie generieren nebeneinander liegende Fahrspuren durch paralleles Verschieben einer ursprünglichen, entlang einer Begrenzungslinie der Fläche verlaufenden Spur. Wenn dieses Verfahren auf ein abschüssiges Flächenstück angewandt wird, und die erzeugten Spuren exakt abgefahren werden, bleiben auf abschüssigem Gelände zwischen zwei Fahrspuren schmale Flächenstreifen unbearbeitet. Wenn die Begrenzungslinie der Fläche nicht parallel sind, werden wie in DE 10 2004 027 242 A1 gezeigt, Fahrspuren erzeugt, die spitzwinklig aufeinander zulaufen und an verschiedenen Stellen im Innern der Fläche enden. Um diese Spuren abzufahren, sind zeitraubend, Boden beanspruchende Wendemanöver mitten auf der Fläche erforderlich.

Aufgabe der vorliegenden Erfindung ist, ein Verfahren und eine Vorrichtung zur Planung von Fahrspuren auf einer landwirtschaftlichen Fläche zu schaffen, die auch bei einer nicht idealen Fläche eine lokal übermäßige Bodenbeanspruchung vermeiden und zügig und effizient abfahrbare Spuren liefern.

Die Aufgabe wird gelöst durch ein Verfahren nach Anspruch 1.

So ist es möglich, auch bei einem Flächenstück von nicht gleichbleibender Breite über dessen ganze Länge durchgehende Spuren zu generieren und Wendemanöver auf offener Fläche zu vermeiden.

Es ist vorgesehen, zwei äußere dieser Fahrspuren parallel zu den Begrenzungslinien festzulegen, um sicherzustellen, dass das Bearbeitungswerkzeug der landwirtschaftlichen Maschine, falls seine Breite nicht verstellbar ist, niemals über die Begrenzungslinien hinausragt. Dies ist insbesondere dann zweckmäßig, wenn die Begrenzungslinien mit den Grenzen eines Ackers übereinstimmen, so dass das Bearbeitungswerkzeug, wenn es über die Begrenzungslinie hinausragt, auf einen Nachbaracker mit einer anderen Frucht ausgreifen oder gegen ein Hindernis stoßen könnte.

Ein Ansatz ist, in Schritt c) die Fahrspuren so anzuordnen, dass die Schnittpunkte der Fahrspuren mit einer die Begrenzungslinien verbindenden Geraden jeweils gleichmäßig beabstandet sind.

Um ein solches Muster zu erhalten, kann die Länge einer ersten und einer zweiten Randlinie ermittelt werden, die zusammen mit den zwei Begrenzungslinien ein Viereck bilden, die Längen der Randlinien werden durch die um 1 verminderte Zahl der Fahrspuren dividiert, um einen ersten bzw. zweiten Abstand zu erhalten, Punkte im ersten bzw. zweiten Abstand werden auf der ersten bzw. zweiten Randlinie festgelegt, und die Fahrspuren werden als je einen Punkt auf der ersten Randlinie und einen Punkt auf der zweiten Randlinie verbindende Geraden festgelegt.

Es gibt auch unterschiedliche Möglichkeiten, um den maximalen Abstand der Begrenzungslinien sinnvoll zu definieren. Wenn die beiden Randlinien auf einer Winkelhalbierenden des von den Begrenzungslinien aufgespannten Winkels in etwa senkrecht stehen, kann die längere der beiden Begrenzungslinien als der maximale Abstand angenommen werden. Eine Definition, die auch dann brauchbar ist, wenn dieses Kriterium nicht erfüllt ist, ist, in Schritt a) die Länge des Lots von jedem Ende wenigstens einer der beiden Begrenzungslinien auf die andere Begrenzungslinie zu ermitteln und als maximalen Abstand das kürzere der Lote anzunehmen.

Um die Zahl der Fahrspuren zu erhalten, kann in Schritt b) der maximale Abstand durch die maximale Arbeitsbreite dividiert und das Ergebnis auf die nächstgrößere ganze Zahl aufgerundet werden.

Einer zweckmäßigen Variante zufolge kann vorab der Rand einer zu bearbeitenden Fläche mit einem Fahrzeug abgefahren werden, vorzugsweise mit einem Fahrzeug, mit dem auch die Bearbeitung der Fläche vorgenommen wird, die Positionsdaten des Fahrzeugs werden während des Abfahrens erfasst, und die zwei Begrenzungslinien werden aus den erfassten Positionsdaten ausgewählt. Somit ist das Verfahren auch dann anwendbar, wenn vorab keine Daten über die Abmessungen einer zu bearbeitenden Fläche vorliegen; es genügt, wenn in einem ersten Schritt der Rand der zu bearbeitenden Fläche abgefahren wird, um die benötigten Daten zu gewinnen. Wenn das Fahrzeug, das den Rand abfährt, dasselbe ist, das auch die Bearbeitung der Fläche vornehmen soll, so kann zweckmäßigerweise eine Bearbeitung der Fläche entlang des Randes bereits erfolgen während dieser abgefahren wird.

Während des Abfahrens des Randes kann ein Lenkausschlag des Fahrzeugs oder der von dem Fahrzeug gefahrene Weg überwacht werden, und Punkte, an denen der Lenkausschlag oder die Richtungsänderung des gefahrenen Wegs ein Maximum erreicht, werden als Anfanges- und Endpunkte der Begrenzungslinien gewählt. So ist die Wahrscheinlichkeit hoch, dass die Anfangs- und Endpunkte tatsächlich mit Ecken der zu bearbeitenden Fläche übereinstimmen.

Wenn das Verfahren während der Bearbeitung der Fläche durchgeführt wird und dabei jeweils zuletzt gefahrene Spuren als Begrenzungslinien genutzt werden, kann Schwierigkeiten bei der Bearbeitung ständig in idealer Weise Rechnung getragen werden. Wenn zum Beispiel der Fahrer der die Bearbeitung vornehmenden Maschine es für erforderlich hält, von einer zuvor geplanten Fahrspur abzuweichen, zum Beispiel um ein bei einer früheren Ausführung des Verfahrens unberücksichtigt gebliebenes (weil evtl, unbekanntes oder nicht vorhersehbares) Hindernis zu umgehen, dann kann die von ihm gefahrene, von der früheren Planung abweichende Spur sofort einer aktualisierten Routenplanung als Begrenzungslinie zugrunde gelegt werden.

Landwirtschaftliche Flächen von komplexer Form können in Weiterentwicklung des oben beschriebenen erfindungsgomäßen Verfahren mit den Schritten a) bis c) in folgender Weise bearbeitet werden:
A) die Fläche wird in eine Mehrzahl von viereckigen Flächenstücke zerlegt, wobei bei jedem dieser Flächenstücke zwei sich gegenüberliegende Begrenzungslinien gleichzeitig Begrenzungslinien der Fläche sind und die Flächenstücke wenigstens jeweils eine Randlinie mit einem anderer Flächenstück gemeinsam haben.
B) der obige schritt a) wird für jedes Flächenstück durchgeführt,
C) es wird dasjenige Flächenstück ausgewählt, für das in Schritt B) der größte maximale Abstand erhalten wurde,
D) die Schritte b) und c) werden für das ausgewählte Flächenstück durchgeführt, und
E) Schritt c) wird für wenigstens ein Flächenstück, das mit dem ausgewählten Flächenstück eine Randlinie gemeinsam hat, vorzugsweise für alle Flächenstücke, unter Zugrundelegung der in Schritt D) festgelegten Zahl von Fahrspuren durchgeführt.

Erfindungsgegenstand ist ferner ein Routenplanungssystem nach Anspruch 8.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1 bis 4 jeweils verschiedene Stufen der Planung von Fahrspuren auf einer zu bearbeitenden Fläche; und
Fig. 5 eine Darstellung zur Veranschaulichung einer abgewandelten Ausgestaltung des Verfahrens.

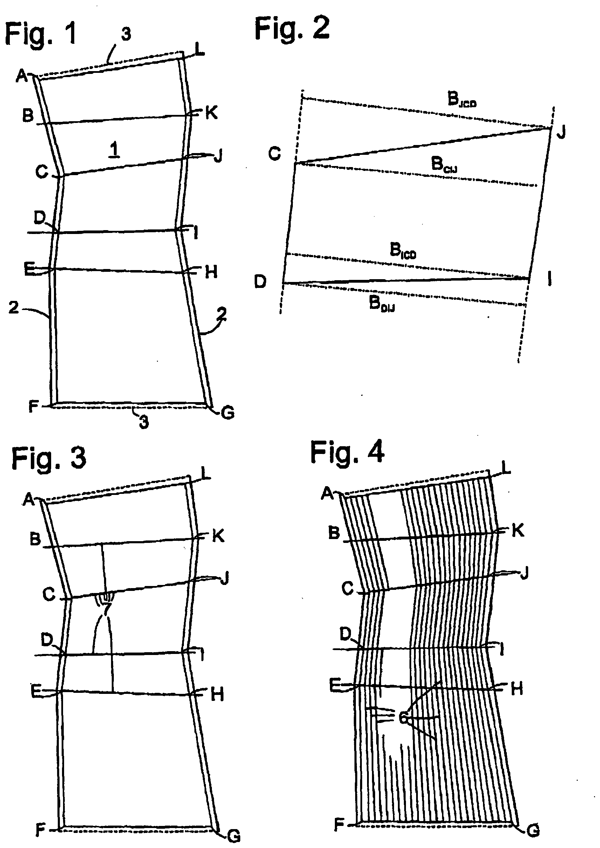

Fig. 1 zeigt exemplarisch eine unregelmäßig geformte, langgestreckte zu bearbeitende landwirtschaftliche Fläche 1. Zwei aus einer Mehrzahl von geraden Strecken aufgebaute Begrenzungslinien 2 erstrecken sich im Wesentlichen in der Längsrichtung der Fläche 1, quer dazu verlaufende Grenzen der Fläche 1 sind als Randlinien 3 bezeichnet. Die Begrenzungslinien 2 sind in Fig. 1 als dicke durchgezogene Linien dargestellt, die Randlinien 3 dünn und gestrichelt.

Ein Routenplanungssystem zum Planen der von einer landwirtschaftlichen Maschine bei der Bearbeitung der Fläche 1 abzufahrenden Fahrspuren umfasst eine geografische Datenbank zum Speichern der Verläufe der Begrenzungslinien 2 und Randlinien 3 der Fläche 1 sowie gegebenenfalls anderer Flächen, eine CPU, die auf die Datenbank zugreift, um den Verlauf der Fahrspuren auf der Fläche 1 zu berechnen, einen Empfänger für Ortungssignale wie etwa GPS-Signale und ein Anzeigeinstrument zum Anzeigen einer anhand der Ortungssignale ermittelten aktuellen Position des landwirtschaftlichen Fahrzeugs und seiner Sollpostition und -richtung gemäß den von der CPU geplanten Fahrspuren, Empfänger und Anzeigeinstrument befinden sich an Bord der landwirtschaftlichen Maschine. CPU und Datenbank können an Bord der Maschine mitgeführt sein oder die geplanten Fahrspuren betreffende Daten per Funk an einen Bordrechner der Maschine übermitteln.

Wenn zu Beginn eines Routenplanungsvorgangs die Begrenzungslinien 2 und Randlinien 3 der Fläche 1 in der Datenbank gespeichert sind, legt einer ersten Ausgestaltung zufolge das Routenplanungssystem zunächst unter Berücksichtigung der Arbeitsbreite der Maschine erste Fahrspuren entlang der Begrenzungslinien 2 auf der Fläche 1 in einem der halben Bearbeitungsbreite entsprechenden Abstand von den Begrenzungslinien 2 fest.

Diese in Fig. 2 gezeigten äußeren Fahrspuren bilden ein Vieleck mit Eckpunkten A, C, E, F, G, I, K, L, von denen die Polygonzüge A-C-E-F und G-I-K-L ein zweiter Satz von Begrenzungslinien und die Strecken F-G und L-A als ein zweiter Satz von Randlinien aufgefasst werden.

Einer zweiten Ausgestaltung zufolge kann das Routenplanungssystem auch dann eine Anordnung der Fahrspuren auf der zu bearbeitenden Fläche 1 planen, wenn der Randverlauf A-C-E-F-G-I--L dieser Fläche 1 vorab nicht bekannt bzw. nicht in einer geografischen Datenbank des Routenplanungssystems hinterlegt ist. Um in einem solchen Fall die Fahrspuren zu planen, genügt es, dass die fahrbare Maschine den Rand der zu bearbeitenden Fläche 1 abfährt. Wenn eine Außenkante des Bearbeitmigswerkzeugs der Maschine sich an den Begrenzungslinien 2 und Randlinien 3 der Fläche 1 entlang bewegt, folgt der Mittelpunkt der Maschine im Wesentlichen der Route, die gemäß der obigen ersten Ausgestaltung als erste Fahrspuren festgelegt worden wäre. Während die Maschine den Rand der Fläche 1 abfährt, erfasst sie fortlaufend ihren Standort mit Hilfe des GPS-Empfängers und liefert ihren Standort sowie einen Lenkereinschlag betreffende Daten an das Routenplanungssystem. Der Lenkereinschlag ist immer dann maximal, wenn die Maschine an einem der Eckpunkte A, C, E, ... ihre Richtung wechseln muss. Das Routenplanungssystem erkennt an der Tatsache, dass der Lenkeinschlag ein Maximum durchläuft, dass sich die Maschine an einer Ecke der Bearbeitungsfläche befindet und erfasst auf diese Weise die Koordinaten der Punkte A, C, E, F, G, I, K, L. Sie legt die im Wesentlichen in Längsrichtung der Fläche 1 verlaufenden Polygonzüge A-C-E-F und G-I-K-L als Begrenzungslinien und quer dazu verlaufenden Strecken F-G und L-A als Randlinien fest. Basierend auf dieser Festlegung ist der weitere Ablauf des Verfahrens bei der ersten und der zweiten Ausgestaltung der gleiche:

Um die Zahl der innerhalb des Vielecks ACEFGHIKL anzuordnenden Fahrspuren zu ermitteln, muss zunächst der maximale Abstand zwischen den sich gegenüberliegenden Begrenzungslinien A-C-E-F und G-I-K-L ermittelt werden. Hierfür wird das Vieleck ACEFGHIKL zunächst in eine Folge von sich berührenden Vierecken zerlegt. Hierzu wird von jeder Ecke C, E der Begrenzungslinie A-C-E-F eine Strecke CJ, EH konstruiert, die die gegenüberliegenden Begrenzungslinie G-I-K-L kreuzt. Entsprechendes geschieht für die zwei Ecken I, K der Begrenzungslinie G-I-K-L. Vorzugsweise sind die Strecken jeweils Winkelhalbierende des Winkels, der an ihrem Ausgangspunkt von den aufeinandertreffenden Streckenabschnitten der Begrenzungslinien, also z.B. des Winkels ACE im Falle der vom Punkt C ausgehenden Strecke C-J. Abweichungen von dieser Orientierung sind ohne weiteres hinnehmbar und können notwendig sein, um zu verhindern, dass die konstruierten Strecken einander auf der Fläche 1 kreuzen. So wird eine Folge von Vierecken ABKL, BCJK, CDIJ, DEHI und EFGH erhalten, von denen jeweils zwei eine Randlinie B-K, C-J, D-I bzw. EH gemeinsam haben.

Für jedes der so erhaltenen Vierecke wird die Breite abgeschätzt. Wie dies geschehen kann, ist in Fig. 2 exemplarisch anhand des Vierecks CDIJ dargestellt. Von jeder Ecke C, D, I, J des Vierecks wird ein Lot B_{CIJ}, B_{DIJ}, B_{ICD}, B_{JCD} auf die jeweils gegenüberliegende Begrenzungslinie IJ bzw. CD gefällt. Von den zwei auf eine gleiche Begrenzungslinie gefällten Loten B_{CIJ}, B_{DIJ} bzw. B_{ICD}, B_{JCD} wird das jeweils längere, hier B_{CIJ} und B_{ICD}, ausgewählt. Der Mittelwert der Längen der ausgewählten Lote wird als Breite des Vierecks CDIJ angenommen.

Die größte Breite aller Vierecke wird als Breite des Vielecks ACEFGHIKL angenommen.

Die auf diese Weise erhaltene Breite wird dividiert durch die maximale Arbeitsbreite der darauf eingesetzten Maschine. Das Ergebnis ist in der Regel nicht ganzzahlig; es wird bis zur nächsten ganzen Zahl n aufgerundet.

Die Randlinien AL, BK, CJ, ..., FG der Vierecke werden in n gleich lange Abschnitte unterteilt, d.h. es werden auf jeder Randlinie n-1 Punkte 7 in jeweils gleichem Abstand voneinander und von den Enden jeder Randlinie festgelegt, wie in Fig. 3 gezeigt. n-1 Fahrspuren 6 werden erhalten, indem diese n-1 Punkte 7 auf jedem der Vierecke der Reihe nach durch Geraden verbunden werden, wie in Fig. 4 dargestellt.

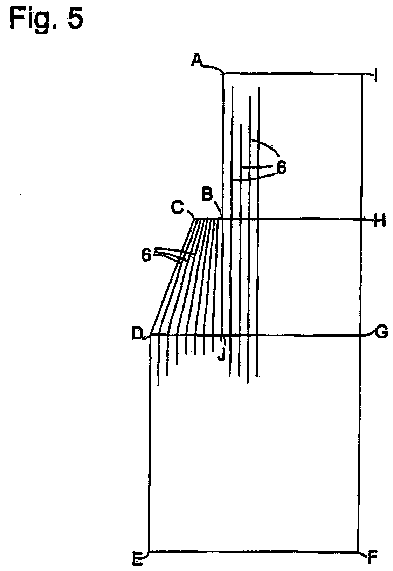

Eine Anordnung der Fahrspuren auf der Fläche ist in Fig. 5 dargestellt. Hier unterteilt das Routenplanungseystem ein zu bearbeitendes Viereck CDGH in ein Trapez GHBJ mit zueinander parallelen Begrenzungslinien GH und BJ und ein unregelmäßiges Viereck BCDJ. Der Abstand zwischen den parallelen Begrenzungslinien
GH und BJ kann gleich einem ganzzahligen Vielfachen der maximalen Arbeitsbreite der fahrbaren Maschine gewählt sein, so dass Fahrspuren, die auf ihrer gesamten Länge die maximale Arbeitsbreite aufweisen, gleichmäßig über das Trapez GHBJ parallel zu dessen parallelen der Begrenzungslinien GH und BJ angeordnet werden können, oder die Begrenzungslinie BJ kann, wie in der Fig. 5 dargestellt, als Verlängerung einer Begrenzungslinie AB eines angrenzenden Vierecks ABHI konstruiert werden, so dass kontinuierlich von einem Vierecke ABHI, GHBJ ins andere übergehende Fahrspuren 6 geplant werden können.

Der weiter oben erläuterten zweiten Ausgestaltung zufolge findet die Festlegung der Fahrspuren in Echtzeit statt, während die Maschine sich bereits auf der zu bearbeitenden Fläche 1 befindet und begonnen hat, deren Rand durch Abfahren zu bearbeiten.

Allgemein ist eine Aktualisierung der Fahrspuranordnung während der Bearbeitung der Fläche 1 jederzeit möglich, indem eine Fahrspur, die von der Maschine gerade abgefahren wird oder als letzte abgefahren worden ist, vom Routenplanungssystem in derselben Weise wie oben für den Rand der Fläche beschrieben erfasst und als eine neue Begrenzungslinie für die noch zu bearbeitende Restfläche aufgefasst wird. Dies ermöglicht es dem Routenplanungssystem, in flexibler weise auf zuvor unberücksichtigte umstände zu reagieren, die den Fahrer der Maschine dazu zwingen, von einer zuvor geplanten Fahrspur abzuweichen, So kann zum Beispiel der Fahrer eines Mähdreschers, der beim Abernten eines Feldes auf eine nicht sicher befahrbare feuchte Stelle stößt, diese umfahren, wobei das die Position des Mähdreschers überwachende Routenplanungssystem aus dem gefahrenen Kurs einen Polygonzug als neue Begrenzungslinie der zu bearbeitenden Fläche ableitet und die so erhaltene Fläche wie z.B. mit Bezug auf Fig. 2 bis 4 beschrieben mit Fahrspuren überplant.

### Bezugszeichen

1 Fläche
2 Begrenzungslinie
3 Randlinie
6 Fahrspur
7 Punkt
A, B, C, ..., R Punkte
AB, BC, CD... Strecken
ABKL, BCJK, CDIJ,... Vierecke

## Patentansprüche

1. Verfahren zur Festlegung von Fahrspuren einer fahrbaren landwirtschaftlichen Maschine auf einem zu bearbeitenden landwirtschaftlichen Flächenstück (1; CDIJ), wobei zwei Begrenzungslinien (2; CD, IJ) des Flächenstücks (CDIJ) divergieren, **gekennzeichnet durch** das Bereitstellen eines Routenplanungssystem umfassend eine als geographische Datenbank ausgeführte Speichereinrichtung zum Speichern von Verläufen von Begrenzungslinien (2) und Randlinien (3) von Flächen (1), eine CPU, um den Verlauf von Fahrspuren auf einer Fläche (1) zu berechnen, sowie einen Empfänger für Ortungssignale, zum :
a) Abschätzen des maximalen Abstands zwischen den zwei Begrenzungslinien (2; CD, IJ);
b) Festlegen der Zahl (n) der Fahrspuren (6) anhand der maximalen Arbeitsbreite der Maschine und des abgeschätzten Abstands;
c) Anordnen jeder Fahrspur (6) zwischen zwei benachbarten Linien, wobei die benachbarten Linien entweder eine weitere Fahrspur (6) oder eine der Begrenzungslinien (2; CD, IJ) sind, derart, dass jedes Paar von einander benachbarten Fahrspuren in die gleiche Richtung wie die zwei Begrenzungslinien divergiert, wobei in Schritt c) zwei äußere Fahrspuren (CD, IJ) parallel zu den Begrenzungslinien (2) festgelegt werden und dass in Schritt c) die Fahrspuren so angeordnet werden, dass die Schnittpunkte der Fahrspuren mit einer die Begrenzungslinien (CD, IJ) verbindenden Geraden (CJ, DI) gleichmäßig beabstandet sind und wobei die Festlegung der Fahrspuren auf einer zu bearbeitenden landwirtschaftlichen Fläche (ACEFGIKL) die Schritte umfasst:
A) Zerlegen der Fläche (ACEFGIKL) in eine Mehrzahl von-viereckigen Flächenstücken (ABKL, BCJK, CDIJ, ...), wobei bei jedem dieser Flächenstücke zwei sich gegenüberliegende Begrenzungslinien (AB, KL, BC, JK, CD, IJ, ...) gleichzeitig Begrenzungslinien der Fläche (ACEFGIKL) sind und die Flächenstücke (ABKL, BCJK, CDIJ, ...) jeweils wenigstens eine Randlinie (BK, CJ, DI, ...) mit einem anderen der Flächenstücke gemeinsam haben,
B) Durchführen des Schritts a) für jedes Flächenstück (ABKL, BCJK, CDIJ, ...),
C) Auswählen desjenigen Flächenstücks, für das der größte maximale Abstand erhalten wurde,
D) Fortsetzen des Verfahrens nach Schritt b für das ausgewählte Flächenstück;
E) Durchführen von Schritt c) für wenigstens ein Flächenstück, das mit dem ausgewählten Flächenstück eine Randlinie gemeinsam hat, unter Zugrundelegung der in Schritt D) festgelegten Zahl (n) von Fahrspuren.

2. Verfahren nach Anspruch 1, **dadurch gekennzeichnet, dass** die Länge einer ersten und einer zweiten Randlinie (CJ, DI) ermittelt wird, die zusammen mit den zwei Begrenzungslinien (CD, IJ) ein Viereck (CDIJ) bilden, dass die Längen der Randlinien (CJ, DI) durch die um 1 verminderte Zahl der Fahrspuren dividiert werden, um einen ersten bzw. zweiten Abstand zu erhalten, dass Punkte im ersten bzw. zweiten Abstand auf der ersten bzw. zweiten Randlinie (CJ, DI) festgelegt werden und die Fahrspuren als je einen Punkt auf der ersten Randlinie und einen Punkt auf der zweiten Randlinie verbindende Geraden festgelegt werden.

3. Verfahren nach einem der vorhergehenden Ansprüche, **dadurch gekennzeichnet, dass** in Schritt a) die Länge des Lots (B_{CIJ}, B_{DIJ}, B_{ICD}, B_{JCD}) von jedem Ende (C, D, I, J) wenigstens einer der beiden Begrenzungslinien (CD, IJ) auf die andere Begrenzungslinie (IJ, CD) ermittelt wird und dass der maximale Abstand anhand der Lote abgeschätzt wird.

4. Verfahren nach einem der vorhergehenden Ansprüche, **dadurch gekennzeichnet, dass** in Schritt b) der maximale Abstand durch die maximale Arbeitsbreite dividiert und das Ergebnis auf die nächstgrößere ganze Zahl aufgerundet wird, um die Zahl (n) der Fahrspuren zu erhalten.

5. Verfahren nach einem der vorhergehenden Ansprüche, **dadurch gekennzeichnet, dass** vorab der Rand einer zu bearbeitenden Fläche mit einem Fahrzeug abgefahren wird, Positionsdaten des Fahrzeugs während des Abfahrens erfasst werden und die zwei Begrenzungslinien (CD, IJ) aus den erfassten Positionsdaten ausgewählt werden.

6. Verfahren nach Anspruch 5, **dadurch gekennzeichnet, dass** ein Lenkausschlag des Fahrzeugs während des Abfahrens erfasst wird und Punkte (C, D, I, J), an denen ein Maximum des Lenkausschlags erfasst wird, als Anfangs- und Endpunkte der Begrenzungslinien (CD, IJ) gewählt werden.

7. Verfahren nach einem der vorhergehenden Ansprüche, **dadurch gekennzeichnet, dass** eine während der Bearbeitung gefahrene Fahrspur erfasst und als eine der Begrenzungslinien den Schritten a) bis c) zugrunde gelegt wird.

8. Routenplanungssystem zur Festlegung von Fahrspuren einer fahrbaren landwirtschaftlichen Maschine auf einem zu bearbeitenden landwirtschaftlichen Flächenstück, wobei zwei Begrenzungslinien des Flächenstücks divergieren, **dadurch gekennzeichnet, dass** das Routenplanungssystem eine als geographische Datenbank ausgeführte Speichereinrichtung zum Speichern von Verläufen von Begrenzungslinien (2) und Randlinien (3) von Flächen (1), eine CPU, um den Verlauf von Fahrspuren auf einer Fläche (1) zu berechnen, sowie einen Empfänger für Ortungssignale umfasst, zum:
a) Abschätzen des maximalen Abstands zwischen den zwei Begrenzungslinien;
b) Festlegen der Zahl der Fahrspuren anhand der maximalen Arbeitsbreite der Maschine und des abgeschätzten Abstands;
c) Anordnen jeder Fahrspur (6) zwischen zwei benachbarten Linien, wobei die benachbarten Linien entweder eine weitere Fahrspur (6) oder eine Begrenzungslinie (2; CD, IJ) sind, derart, dass jedes Paar von einander benachbarten Fahrspuren in die gleiche Richtung wie die zwei Begrenzungslinien divergiert, wobei in Schritt c) zwei äußere Fahrspuren (CD, IJ) parallel zu den Begrenzungslinien (2) festgelegt werden und dass in Schritt c) die Fahrspuren so angeordnet werden, dass die Schnittpunkte der Fahrspuren mit einer die Begrenzungslinien (CD, IJ) verbindenden Graden (CJ, DI) gleichmäßig beabstandet sind und wobei die Festlegung der Fahrspuren auf einer zu bearbeitenden landwirtschaftlichen Fläche (ACEFGIKL) die Schritte umfasst:
A) Zerlegen der Fläche (ACEFGIKL) in eine Mehrzahl von viereckigen Flächenstücken (ABKL, BCJK, CDIJ, ...), wobei bei jedem dieser Flächenstücke zwei sich gegenüberliegende Begrenzungslinien (AB, KL, BC, JK, CD, IJ, ...) gleichzeitig Begrenzungslinien der Fläche (ACEFGIKL) sind und die Flächenstücke (ABKL, BCJK, CDIJ, ...) jeweils wenigstens eine Randlinie (BK, CJ, DI, ...) mit einem anderen der Flächenstücke gemeinsam haben,
B) Durchführen des Schritts a) für jedes Flächenstück (ABKL, BCJK, CDIJ, ...),
C) Auswählen desjenigen Flächenstücks, für das der größte maximale Abstand erhalten wurde,
D) Fortsetzen des Verfahrens nach Schritt b für das ausgewählte Flächenstück;
E) Durchführen von Schritt c) für wenigstens ein Flächenstück, das mit dem ausgewählten Flächenstück eine Randlinie gemeinsam hat, unter Zugrundelegung der in Schritt D) festgelegten Zahl (n) von Fahrspuren..

## Claims

1. A method of establishing travel lines of a mobile agricultural machine on an agricultural surface plot (1; CDIJ) to be worked, wherein two boundary lines (2; CD, IJ) of the surface plot (CDIJ) diverge, **characterised by** the provision of a route planning system including a memory device in the form of a geographical data base for storing configurations of boundary lines (2) and edge lines (3) of surfaces (1), a CPU to calculate the configuration of travel lines on a surface (1), and a receiver for location signals, for:
a) estimating the maximum spacing between the two boundary lines (2; CD, IJ);
b) establishing the number (n) of the travel lines (6) on the basis of the maximum working width of the machine and the estimated spacing; and
c) arranging each travel line (6) between two adjacent lines, wherein the adjacent lines are either a further travel line (6) or one of the boundary lines (2; CD, IJ) in such a way that each pair of mutually adjacent travel lines diverges in the same direction as the two boundary lines, wherein in step c) two outer travel lines (CD, IJ) are established parallel to the boundary lines (2) and in step c) the travel lines are so arranged that the intersections of the travel lines with a straight line (CJ, DI) connecting the boundary lines (CD, IJ) are uniformly spaced, and wherein the step of establishing the travel lines on an agricultural surface (ACEFGIKL) to be worked comprises the steps:
A) breaking down the surface (ACEFGIKL) into a plurality of quadrangular surface plots (ABKL, BCJK, CDIJ, ...), wherein in relation to each of said surface plots two mutually opposite boundary lines (AB, KL, BC, JK, CD, IJ, ...) are at the same time boundary lines of the surface (ACEFGIKL) and the surface plots (ABKL, BCJK, CDIJ, ...) respectively have in common at least one edge line (BK, CJ, DI, ...) with another of the surface plots,
B) carrying out step a) for each surface plot (ABKL, BCJK, CDIJ, ...),
C) selecting that surface plot for which the greatest maximum spacing was obtained,
D) continuing the method according to step b for the selected surface plot; and
E) carrying out step c) for at least one surface plot which has an edge line in common with the selected surface plot based on the number (n) of travel lines established in step D).

2. A method according to claim 1 **characterised in that** the length of a first and a second edge line (CJ, DI) which together with the two boundary lines (CD, IJ) form a quadrilateral (CDIJ) is ascertained, that the lengths of the edge lines (CJ, DI) are divided by the number of travel lines reduced by 1 to obtain a first and a second spacing respectively, that points in the first and second spacings respectively on the first and second edge lines (CJ, DI) are established, and the travel lines are established as straight lines respectively connecting a point on the first edge line and a point on the second edge line.

3. A method according to one of the preceding claims **characterised in that** in step a) the length of the perpendicular (B_{CIJ}, B_{DIJ}, B_{ICD}, B_{JCD}) from each end (C, D, I, J) of at least one of the two boundary lines (CD, IJ) on to the other boundary line (IJ, CD) is ascertained and the maximum spacing is estimated on the basis of the perpendiculars.

4. A method according to one of the preceding claims **characterised in that** in step b) the maximum spacing is divided by the maximum working width and the result is rounded off to the next higher whole number to obtain the number (n) of travel lines.

5. A method according to one of the preceding claims **characterised in that** first the edge of a surface to be worked is travelled with a vehicle, positional data of the vehicle are detected during the travel procedure and the two boundary lines (CD, IJ) are selected from the detected positional data.

6. A method according to claim 5 **characterised in that** a steering deflection of the vehicle during the travel procedure is detected and points (C, D, I, J) at which a maximum of steering deflection is detected are selected as starting and end points of the boundary lines (CD, IJ).

7. A method according to one of the preceding claims **characterised in that** a travel line which is travelled during the working operation is detected and forms the basis for steps a) to c) as one of the boundary lines.

8. A route planning system for establishing travel lines of a mobile agricultural machine on an agricultural surface plot to be worked, wherein two boundary lines of the surface plot diverge, **characterised in that** the route planning system includes a memory device in the form of a geographical data base for storing configurations of boundary lines (2) and edge lines (3) of surfaces (1), a CPU to calculate the configuration of travel lines on a surface (1), and a receiver for location signals, for:
a) estimating the maximum spacing between the two boundary lines;
b) establishing the number of the travel lines on the basis of the maximum working width of the machine and the estimated spacing; and
c) arranging each travel line (6) between two adjacent lines, wherein the adjacent lines are either a further travel line (6) or a boundary line (2; CD, IJ) in such a way that each pair of mutually adjacent travel lines diverges in the same direction as the two boundary lines, wherein in step c) two outer travel lines (CD, IJ) are established parallel to the boundary lines (2) and in step c) the travel lines are so arranged that the intersections of the travel lines with a straight line (CJ, DI) connecting the boundary lines (CD, IJ) are uniformly spaced, and wherein the step of establishing the travel lines on an agricultural surface (ACEFGIKL) to be worked comprises the steps:
A) breaking down the surface (ACEFGIKL) into a plurality of quadrangular surface plots (ABKL, BCJK, CDIJ, ...), wherein in relation to each of said surface plots two mutually opposite boundary lines (AB, KL, BC, JK, CD, IJ, ...) are at the same time boundary lines of the surface (ACEFGIKL) and the surface plots (ABKL, BCJK, CDIJ, ...) respectively have in common at least one edge line (BK, CJ, DI, ...) with another of the surface plots,
B) carrying out step a) for each surface plot (ABKL, BCJK, CDIJ, ...),
C) selecting that surface plot for which the greatest maximum spacing was obtained,
D) continuing the method according to step b for the selected surface plot; and
E) carrying out step c) for at least one surface plot which has an edge line in common with the selected surface plot based on the number (n) of travel lines established in step D).

## Revendications

1. Procédé de définition de voies de passage d'une machine agricole roulante sur une portion de surface agricole à travailler (1 ; CDIJ), deux lignes de délimitation (2 ; CD, IJ) de la portion de surface (CDIJ) étant divergentes, **caractérisé par** la mise à disposition d'un système de planification d'itinéraire comprenant un dispositif de mémorisation pour mémoriser des tracés de lignes de délimitation (2) et de lignes de bordure (3) de surfaces (1), une unité centrale pour calculer le tracé de voies de passage sur une surface (1) ainsi qu'un récepteur de signaux de positionnement, pour :
a) estimer la distance maximale entre les deux lignes de délimitation (2 ; CD, IJ) ;
b) définir le nombre (n) de voies de passage (6) à l'aide de la largeur de travail maximale de la machine et de la distance estimée ;
c) disposer chaque voie de passage (6) entre deux lignes voisines, les lignes voisines étant soit une autre voie de passage (6), soit une des lignes de délimitation (2 ; CD, IJ), de façon que chaque paire de voies de passage voisines l'une de l'autre diverge dans le même sens que les deux lignes de délimitation, à l'étape c) deux voies de passage extérieures (CD, IJ) étant définies parallèlement aux lignes de délimitation (2), et que, à l'étape c), les voies de passage soient disposées de façon que les points d'intersection des voies de passage avec une droite (CJ, DI) reliant les lignes de délimitation (CD, IJ) soient régulièrement espacés, et la définition des voies de passage sur une surface agricole à travailler (ACEFGIKL) comprenant les étapes suivantes :
A) décomposition de la surface (ACEFGIKL) en une pluralité de portions de surface quadrangulaires (ABKL, BCJK, CDIJ, ...), deux lignes de délimitation (AB, KL, BC, JK, CD, IJ, ...) opposées l'une à l'autre étant en même temps des lignes de délimitation de la surface (ACEFGIKL) pour chacune de ces portions de surface et les portions de surface (ABKL, BCJK, CDIJ, ...) ayant chaque fois au moins une ligne de bordure (BK, CJ, DI, ...) en commun avec une autre des portions de surface,
B) exécution de l'étape a) pour chaque portion de surface (ABKL, BCJK, CDIJ, ...),
C) sélection de la portion de surface pour laquelle la plus grande distance maximale a été obtenue,
D) poursuite du procédé selon l'étape b pour la portion de surface sélectionnée ;
E) exécution de l'étape c) pour au moins une portion de surface qui a une ligne de bordure en commun avec la portion de surface sélectionnée, en prenant pour base le nombre (n) de voies de passage défini à l'étape D).

2. Procédé selon la revendication 1, **caractérisé en ce que** la longueur d'une première et d'une deuxième ligne de bordure (CJ, DI) qui forment avec les deux lignes de délimitation (CD, IJ) un quadrilatère (CDIJ) est déterminée, que les longueurs des lignes de bordure (CJ, DI) sont divisées par le nombre de voies de passage diminué de 1 pour obtenir un premier, respectivement deuxième, écartement, que des points sont définis au premier, respectivement deuxième, écartement sur la première, respectivement deuxième, ligne de bordure (CJ, DI), et que les voies de passage sont définies par des droites reliant chaque fois un point sur la première ligne de bordure et un point sur la deuxième ligne de bordure.

3. Procédé selon une des revendications précédentes, **caractérisé en ce qu'**à l'étape a), la longueur de la perpendiculaire (B_{CIJ}, B_{DIJ}, B_{ICD}, B_{JCD}) de chaque extrémité (C, D, I, J) d'au moins une des deux lignes de délimitation (CD, IJ) à l'autre ligne de délimitation (IJ, CD) est déterminée et que la distance maximale est estimée à l'aide des perpendiculaires.

4. Procédé selon une des revendications précédentes, **caractérisé en ce qu'**à l'étape b), la distance maximale est divisée par la largeur de travail maximale et le résultat est arrondi au nombre entier supérieur le plus proche pour obtenir le nombre (n) de voies de passage.

5. Procédé selon une des revendications précédentes, **caractérisé en ce que** le bord d'une surface à travailler est parcouru au préalable avec un véhicule, les données de position du véhicule pendant le parcours sont enregistrées et les deux lignes de délimitation (CD, IJ) sont sélectionnées à partir des données de position enregistrées.

6. Procédé selon la revendication 5, **caractérisé en ce qu'**un angle de braquage du véhicule est enregistré pendant le parcours et les points (C, D, I, J) auxquels un maximum de l'angle de braquage est détecté sont choisis comme points de départ et de fin des lignes de délimitation (CD, IJ).

7. Procédé selon une des revendications précédentes, **caractérisé en ce qu'**une voie de passage parcourue pendant le travail est enregistrée et utilisée comme une des lignes de délimitation servant de base pour les étapes a) à c).

8. Système de planification d'itinéraire pour la définition de voies de passage d'une machine agricole roulante sur une portion de surface agricole à travailler, deux lignes de délimitation de la portion de surface étant divergentes, **caractérisé en ce que** le système de planification d'itinéraire comprend un dispositif de mémorisation conformé en banque de données géographiques pour mémoriser des tracés de lignes de délimitation (2) et de lignes de bordure (3) de surfaces (1), une unité centrale pour calculer le tracé de voies de passage sur une surface (1) ainsi qu'un récepteur de signaux de positionnement, pour :
a) estimer la distance maximale entre les deux lignes de délimitation ;
b) définir le nombre de voies de passage à l'aide de la largeur de travail maximale de la machine et de la distance estimée ;
c) disposer chaque voie de passage (6) entre deux lignes voisines, les lignes voisines étant soit une autre voie de passage (6), soit une ligne de délimitation (2 ; CD, IJ), de façon que chaque paire de voies de passage voisines l'une de l'autre diverge dans le même sens que les deux lignes de délimitation, à l'étape c) deux voies de passage extérieures (CD, IJ) étant définies parallèlement aux lignes de délimitation (2), et que, à l'étape c), les voies de passage soient disposées de façon que les points d'intersection des voies de passage avec une droite (CJ, DI) reliant les lignes de délimitation (CD, IJ) soient régulièrement espacés, et la définition des voies de passage sur une surface agricole à travailler (ACEFGIKL) comprenant les étapes suivantes :
A) décomposition de la surface (ACEFGIKL) en une pluralité de portions de surface quadrangulaires (ABKL, BCJK, CDIJ, ...), deux lignes de délimitation (AB, KL, BC, JK, CD, IJ, ...) opposées l'une à l'autre étant en même temps des lignes de délimitation de la surface (ACEFGIKL) pour chacune de ces portions de surface et les portions de surface (ABKL, BCJK, CDIJ, ...) ayant chaque fois au moins une ligne de bordure (BK, CJ, DI, ...) en commun avec une autre des portions de surface,
B) exécution de l'étape a) pour chaque portion de surface (ABKL, BCJK, CDIJ, ...),
C) sélection de la portion de surface pour laquelle la plus grande distance maximale a été obtenue,
D) poursuite du procédé selon l'étape b pour la portion de surface sélectionnée ;
E) exécution de l'étape c) pour au moins une portion de surface qui a une ligne de bordure en commun avec la portion de surface sélectionnée, en prenant pour base le nombre (n) de voies de passage défini à l'étape D).
